# FASCICULE DE BREVET EUROPEEN

(11) **EP 1 564 105 B1**
(45) Date de publication et mention de la délivrance du brevet: **07.01.2009**
(21) Numéro de dépôt: 04380023.4
(22) Date de dépôt: 05.02.2004
(51) Int. Cl.: B62B 3/14, B62B 3/16, A45C 3/04, B65D 1/38

(54) **Panier-chariot multiorientable**
Multidirektioneller, fahrbarer Einkaufskorb
Mulitdirectional drivable shopping basket

(43) Date de publication de la demande: 17.08.2005
(73) Titulaire: Inmobiliaria Masife, S.L., 50020 Zaragoza (ES)
(72) Inventeur: Simon Fleta, D. Mariano, Grupo 31, 50020 Zaragoza (ES)
(74) Mandataire: Manzano Cantos, Gregorio

(56) Documents cités:
- EP-A- 1 407 956
- FR-A- 2 006 095
- GB-A- 661 981
- US-A- 1 689 448
- US-A- 5 469 986
- US-A- 5 678 843
- US-A- 5 692 761
- US-B1- 6 651 992

## Description

### OBJET DE L'INVENTION

Ce mémoire descriptif comme l'indique le titre, a pour objet de fournir un panier destiné à l'utilisation dans les achats habituels par les propres clients des grandes surfaces ou supermarchés, établissements en régime de self-service, selon une solution de l'invention connue dans laquelle le panier dispose d'une anse pour son usage manuelle et en outre, selon l'invention, de jeux de roues sur son fond avec une anse de traction pour sa fonction en mode de chariot, de manière qu'il puisse transporter facilement, surtout lorsque le poids du contenu du panier est élevé, au moyen de l'appui et la rotation des roues, avec la traction ou le poussage que lui fournit l'utilisateur à travers une anse de traction et, évidemment, son utilisation comme panier pour les courses, peut être mise en oeuvre de la manière habituelle au moyen de l'anse, car aussi bien l'anse de saisie que l'anse de traction, peuvent se ramasser entre elles, en formant un panier propre qui permet son empilage, l'un sur l'autre, mais avec des avantageuses possibilités ajoutées à celle-ci, selon l'actuelle invention, dans laquelle, elle comprend des moyens multiorientables pour conduire convenablement et librement le panier et lesdits moyens de traction munis d'une option extensible ou susceptible de prolongement pour l'adapter aux besoins de la hauteur de l'utilisateur, ainsi que d'autres améliorations ordinaires relatives aux moyens de traction unidirectionnels et aux moyens de poignée en suspension.

### ETAT DE LA TECHNIQUE

Il existe sur le marché de nombreux paniers pour les courses dans les établissements self-service, en prédominant ceux constitués en matière plastique rigides, rectangulaires et empilables, ainsi que ceux en plastique semi-flexible avec un fond de surface ovale à mode de panier classique et on emploie aussi, dans une moindre mesure, des paniers ou des corbeilles en matières tissées, joncs, osier, ou d'autres tombées en désuétude à cause de leur fabrication artisanale et très élaborée.

Parmi les premiers on peut remarquer les Modèles d'Utilité N° ES U-9400303 "Panier amélioré et N° ES U-9502610 "Panier rectangulaire à anses amélioré", dont le demandeur et le titulaire, est la même personne physique que l'inventeur actuel de l'invention améliorée selon ce nouveau brevet qui est une suite du brevet Européen n° 03380220.8 dans lequel on contemplait un panier à structure rigide avec des moyens de poignée par suspension rabattables dans lequel originairement on incorporait une deuxième anse, également rabattable, qui une fois déployée permet l'entraînement par traction, de préférence, ou par poussage dudit panier à travers des moyens stratégiques de roulement situés sur la base dudit panier, en obtenant une solution optimale pour un type d'objet, efficacement expérimenté, qui sans altérer pratiquement sa physionomie ni ses procédés de fabrication il est muni d'une fonction inestimable, spéciale et logiquement lorsque l'on a fait les achats et que l'on a chargé les marchandises.

Bien que tous les dépôts d'usage ici indiqués accomplissent leur fonction, c'est sans doute une solution avantageuse et positive lorsque les articles déposés dans le panier supposent un poids de plusieurs kilos, ce qui implique des ennuis d'incommodités et d'efforts pour l'utilisateur.

Le document US 1,689,448 peut être considéré comme représentant l'art antérieur le plus proche.

### DESCRIPTION DE L'INVENTION

Le panier-chariot ici préconisé, est conçu pour résoudre quelques aspects de la solution antérieure, en proposant des améliorations qui supposent des avantageuses possibilités supplémentaires dudit panier roulant qui en soi-même, est décrit avec une figure rectangulaire avec des lignes tronconiques, avec des parois allégées au moyen d'orifices de différentes figures, en disposant sur son périmètre supérieur d'un cadre aux extrémités duquel on prévoit deux orifices de pivotement pour articuler respectivement la seule anse longitudinale respective pour la positionner, soit pour sa saisie par l'utilisateur, soit pour son rabattement sur le propre cadre du panier, et grâce à sa double fonction de panier et de chariot, et selon l'invention, elle contient à ses extrémités du fond du panier, d'un côté, un jeu de roulettes unidirectionnelles, supportées par un arbre commun emboîté par des douilles à pression respectives et de l'autre côté opposé une tête pilote tournante multiorientable ce qui lui permet de faire tourner librement le panier, aussi bien lorsque l'on le pousse que lorsque l'on tire sur lui, tandis que du côté opposé sur son cadre supérieur précité, on y met en place essentiellement et latéralement une seule anse de traction, extensible, avec au moins, deux, trois ou plus des positions d'allongement avec des points d'enclenchement respectifs; sous forme de "U", dont les extrémités sont articulées à l'extérieur du cadre, de manière à ce qu'en position de pliage, l'anse de traction repose à l'extérieur du cadre du panier, qui au moyen de la rotation de l'anse de traction, demeure en position d'être saisie pour le roulement de l'ensemble panier chariot et la marchandise. Ainsi, le nivellement du panier est totalement équilibré avec la disposition affleurée des éléments de roulement unidirectionnels et multiorientable, qui cependant sont compensés avec le rebord ayant une légèrement moins haute que celle des membres précités de roulement.

### DESCRIPTION DES DESSINS

Pour compléter la description en cours et afin d'aider à une meilleure compréhension des caractéristiques de l'invention, on annexe en tant que partie intégrante de celle-ci, des feuilles de dessins, dans lesquelles à caractère illustratif et non pas limitatif, on a représenté ce qui suit :

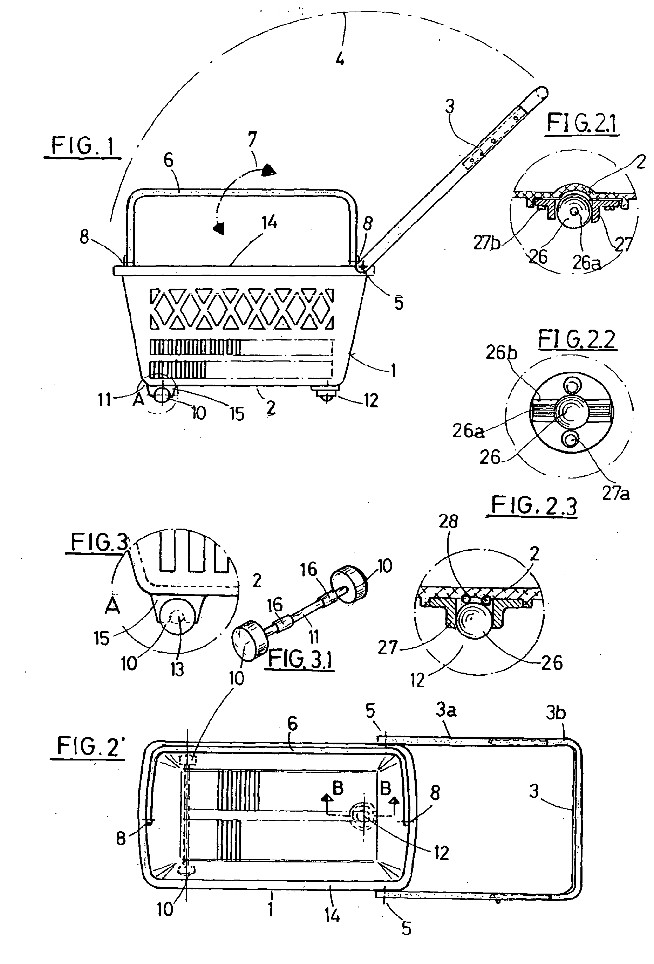

La figure 1, montre une vue en élévation latérale de l'ensemble (1) panier-chariot, en appréciant l'anse (6) longitudinale de suspension déployée sur le socle intérieur du cadre (14) avec une course (7) bilatérale et, à sa position de course, dessinée en pointillés sur ses points (8) de pivotement, en incorporant une anse (3) de traction télescopique en position de transport et en marquant le rayon d'articulation avec la référence (4). À une extrémité du fond (2) du corps du panier (1), on observe les roulettes (10) unidirectionnelles, montées sur l'arbre (11) correspondant, tandis qu'à l'autre extrémité apparaît le membre (12) de roulement multiorientable, qui optionnellement, peut aussi être remplacé par un autre jeu de roulettes (10), avec les mêmes caractéristiques que les antérieures.
La figure 2, contemple la vue en plan de la figure antérieure, dans laquelle apparaît le panier (1) avec les pivots (8) d'articulation de l'anse (6) de suspension, et également les arbres (5) d'articulation, correspondant à l'anse (3) de traction télescopique, sur le socle extérieur du cadre (14), ainsi que la disposition des roulettes (10) unidirectionnelles avec son arbre (11) de rotation correspondant adapté sur le fond (2) du panier (1) et à l'extrémité opposée, l'organe (12) multiorientable correspondant.
La figure 2.1 est la section B-B de la figure 2 agrandie coupée verticalement et longitudinalement par l'arbre (26a) de rotation du membre (26) de roulement multiorientable.
La figure 2.2 est une vue en plan de la figure 2.1 dans laquelle on voit les appuis (26b) de l'arbre (26a) de rotation du membre (26) de roulement multiorientable.
La figure 2.3 est l'autre section B-B de la figure 2 agrandie, coupée verticalement par le diamètre du membre (12) multiorientable sur le fond (2) du panier (1).
La figure 3, est le détail (A) de la figure 1 agrandi, de fixation de l'arbre (11) et les roulettes (10) unidirectionnelles sur des logements (13) qui dispose le fond (2) du corps du panier (1).
La figure 3.1 est un détail en perspective de l'arbre (11) du jeu de roulettes (10) unidirectionnelles.
La figure 4 est une vue longitudinalement sectionnée de l'anse (3) de traction qui a une partie (3a) fixe et une autre télescopique extensible (3b) à deux, trois ou plusieurs positions (18) au moyen d'un organe (17) extérieur d'enclenchement.
La figure 5 est une vue similaire à la figure 4 d'un organe (19) intérieur d'enclenchement.
La figure 6 est une vue similaire aux figures 4 et 5 avec un organe (29) d'enclenchement intérieur avec un ressort (30) à lame.

Ces figures ont été mises en rapport avec les références numériques suivantes :
1.- Ensemble panier-chariot.
2.- Fond du panier.
3.- Anse de traction télescopique du panier-chariot.
3a.- Partie fixe anse de traction.
3b.- Partie extensible anse de traction.
4.- Arc de course de l'anse de traction.
5.- Arbres de rotation de l'anse de traction.
6.- Anse-manette du panier.
7.- Arc de course de l'anse-manette.
8.- Pivots de rotation de l'anse-manette.
9.- Orifices décoratifs d'allégement.
10.- Roulettes unidirectionnelles de déplacement.
11.- Arbres des roulettes.
12.- Organe de roulement multiorientable.
13.- Logement de l'arbre des roulettes.
14.- Cadre supérieur du panier.
15.- Oreilles d'appui des supports de l'arbre des roulettes
16.- Support de l'arbre des roulettes de fixation à pression.
17.- Organe extérieur d'enclenchement.
18.- Points d'enclenchement.
19.- Organe intérieur d'enclenchement.
20.- Membre d'enclenchement de l'organe extérieur.
21.- Ressort à pression du membre d'enclenchement extérieur.
22.- Douille vissée du logement de l'organe extérieur d'enclenchement.
23.- Membre d'enclenchement de l'organe intérieur.
24.- Ressort à pression du membre d'enclenchement intérieur.
25.- Moyeu d'installation du membre intérieur d'enclenchement.
26.- Bille de l'organe multiorientable de roulement.
26a- Arbre de rotation de la bille
26b- Appuis de l'arbre de rotation
27.- Douilles de la bille de l'organe multiorientable.
27a- Mamelons de serrage de la douille.
27b- Serrages de la douille
28.- Coussinets à bille de l'organe multiorientable.
29.- Piton d'enclenchement intérieur.
30.- Ressort à lame du piton.
31.- Mouvement extensible de l'anse de traction.

### REALISATION PREFEREE DE L'INVENTION

D'après ces figures et des références numériques, on peut observer que l'objet du brevet est constitué d'un corps de panier (1) fondamentalement à figure tronconique, à plan rectangulaire en disposant d'une anse-manette (6) longitudinale sous forme de "U", articulée aux extrémités de ses ailes au moyen des pivots (8) de rotation et appuyées sur le socle intérieur du cadre (14) qui dispose sur la partie supérieure ou embouchure de l'ensemble du panier (1) d'un arc (7) de pliage.

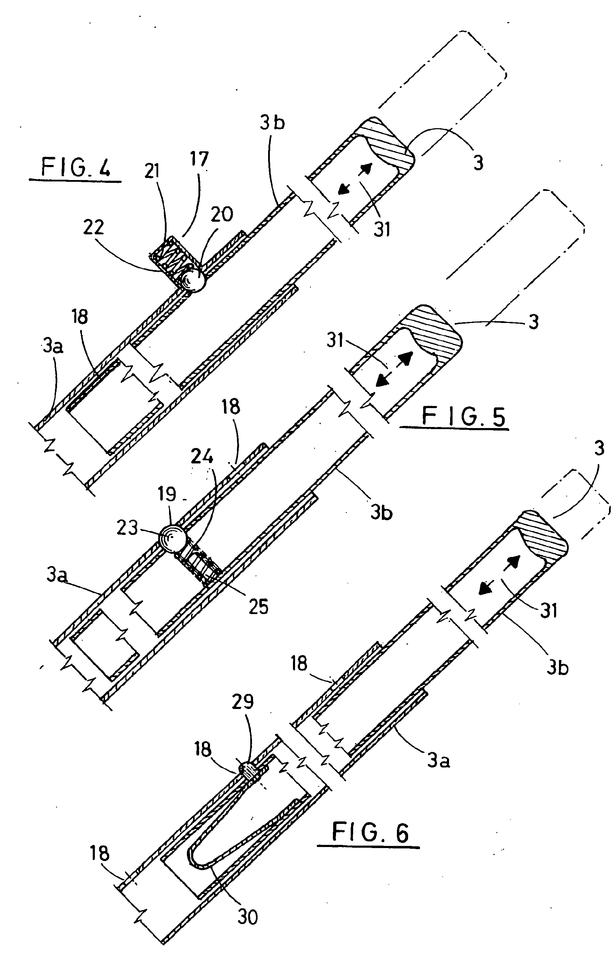

Par ailleurs sur les côtés du socle extérieur d'une extrémité du cadre (14) du corps du panier (1), il comporte de manière articulée, la nouvelle anse (3) de traction télescopique sous forme générale de « U » , qui comprend un brin (3a) fixe dont ses extrémités reposent sur des arbres (5) de rotation, en permettant lors de sa course (4), un arc de cercle d'environ 135°, le pliage et le dépliage de l'ensemble (3) qui est complété avec un autre brin (3b) extensible guidé télescopiquement dans l'antérieur avec l'incorporation de membres pertinents d'enclenchement (17) extérieur, et (19) intérieur, pour établir deux, trois ou plusieurs possibilités (31) d'extension (figures 4, 5 et 6), sur les points (18) d'enclenchement respectifs desdits brins fixe (3a) et extensible (3b) de l'anse (3) de traction.

Du fait que l'anse (6) longitudinale permet de maintenir le panier en suspension, l'anse (3) de traction télescopique permet d'entraîner ou de pousser le corps de panier-chariot (1) au moyen de l'ensemble d'éléments (10) de roulement unidirectionnel et le membre (12) de roulement multiorientable, situés sur la base (2) dudit panier de manière que les premiers maintiennent la direction guidée dudit panier (1), et le deuxième fait la fonction de roue pilote pour orienter librement sa direction.

Ainsi et selon cette réalisation préférée les roulettes (10) sont montées sur un arbre (11) commun sur lequel sont incorporées deux douilles (16) à vis qui à mode de supports sont montées à pression dans les logements (13) des deux oreilles (15) solidaires du fond (2) dudit panier (1) et l'organe (12) de roulement multiorientable, monté à une position opposée à l'antérieure, comprend un membre (26) de roulement sphérique de rotation libre, logé en la douille (27) correspondante fixée par des presse-matériels (27b) dans les mamelons (27a) correspondants (Figures 2.1 et 2.2) et avec l'arbre (26a) de rotation supporté sur les appuis (26b) et dans une autre version avec un siège (28) de coussinets pour faciliter la rotation libre de ladite sphère (26) (figure 2.3) ou siège (28) de coussinets pour une roue libre unique optionnelle.

Par conséquent l'anse (3) de traction à ses différentes positions (18) extensibles s'adaptera aux différents besoins d'hauteur des utilisateurs en pouvant situer le brin (3b) extensible à différentes hauteurs au moyen des organes (17), (19) et (29) d'enclenchement respectifs extérieur et intérieurs respectivement qui, de préférence, comprennent un membre (20) d'enclenchement, pressé par le ressort (21) respectif logé dans une douille (22) qui est fixée dans le brin (3a) extérieur de l'anse (3) de traction; d'un membre (23) d'enclenchement, également pressé par le ressort (24) respectif logé dans un moyeu (25) respectif qui sert d'installation pour ledit organe à l'intérieur du brin (3b) de ladite anse (3) de traction. Dans ce cas, en tant que les plus appropriés, les membres (20) et (23) d'enclenchement, ont été prévus sous forme sphérique, mais ils pourraient aussi être de tout autre forme appropriée, conique, tronconique, semi-sphérique ou similaire comme celle intégrée par un piton (29) solidaire d'un arbre (30) lamellaire sous forme de ressort à lame et également logé à l'intérieur du brin (3b) extensible de l'anse (3) de traction (figure 6), qui accomplit la mission instantanée de se situer sur les points (18) d'enclenchement avec une simple traction o poussage de l'anse (3) de traction ou plus précisément de la partie (3b) extensible.

Le corps du panier (1), comprend ou peut comporter sur ses parois et sur son fond (2), des orifices (9) ou trous de différentes formes et dimensions qui outre le fait de lui pourvoir un effet décoratif, allègent l'ensemble du panier, en obtenant de ce fait une économie de poids et de matière.

La présente invention a été conçue, au moyen de la figure régulière à base rectangulaire avec des prolongements sur un polygone tronconique, cette base pouvant être sous la forme d'une figure différente, ou prismatique, conique, cylindrique, ou autre en adaptant dans ce cas les anses (6 et 3) correspondantes à la configuration correspondantes.

De préférence, les matières de tous les composants seront à base de plastiques injectés, recyclés ou vierges, en étant toutefois susceptibles de variations, comme il a déjà été dit ci-dessus, de la forme et des dimensions des différentes pièces, sans que cela ne suppose toutefois une altération de l'essentiel de l'invention.

La nature de l'invention étant suffisamment décrite, en tenant compte des termes de la rédaction, qui devront être interprétés dans un sens large et non pas limitatif, tout comme la description du mode de mise en oeuvre, en prouvant qu'elle constitue une avance technique positive en ce qui concerne la fabrication de ces paniers-chariots, et c'est pour cela que l'on demande le dépôt de ce qui constitue l'essentiel de ladite invention, ce qui est spécifié à la suite, dans les suivants:

## Revendications

1. Panier-chariot multiorientable, du type de ceux utilisés dans les établissements en self-service, dans lesquels l'utilisateur dépose les produits choisis et les transporte jusqu'à la caisse pour payer les produits, pour postérieurement être empilés l'un sur l'autre, la matière plastique étant la matière employée lors de sa fabrication, par une disposition de l'ensemble de panier (1) à base rectangulaire avec un prolongement ascendant ayant une figure tronconique, au moyen des parois et du fond du corps du panier (2), dans lesquels on pratique des orifices ou trous (9) vidés, le panier disposant sur sa partie supérieure d'un cadre (14) qui l'encadre sur tout son le périmètre, qui contient sur sa base supérieure une anse-manette (6), à figure en « U », pivotée sur des points (8) de rotation, qui lui permettent une course (7) et qui est équipé d'une anse (3) de traction et de moyens (10) de roulement qui est **caractérisé en ce que** l'anse (3) de traction correspondante, sous la forme de « U », est extensible (31) à deux, trois ou plusieurs positions à travers les points (18) d'enclenchement respectifs réalisés à cet effet sur les brins télescopiquement guidés, un fixe (3a) et un autre mobile (3b), de ladite anse (3) de traction sous forme de « U » qui comprennent également des organes d'enclenchement (17) correspondant extérieur et (19) et (29) intérieurs, en définissant l'extension appropriée pour l'entraînement par traction ou poussage dudit panier (1) à travers ses moyens (10) de roulement unidirectionnels (10) et multiorientable (12) correspondants situés aux extrémités respectives de la base ou fond (2) du panier (1) pour sa conduite libre et indépendante.

2. Panier-chariot multiorientable selon la revendication 1, lesdits points d'enclenchement se **caractérisent en ce qu'**ils sont de simples orifices (18), alignés et espacés sur le brin (3a) fixe ou sur le brin (3b) mobile de l'anse(3) de traction sous forme de « U ».

3. Panier-chariot multiorientable, selon la revendication 1, l'organe d'enclenchement extérieur se **caractérise en ce qu**'il comprend un membre (20) d'enclenchement pressé par un ressort (21) respectif et logé dans une douille (22) fixée sur le brin (3a) de l'anse (3) de traction.

4. Panier-chariot multiorientable, selon la revendication 1, un organe d'enclenchement intérieur se **caractérise en ce qu'**il comprend un membre (23) d'enclenchement pressé par le ressort (24) respectif et monté sur le moyeu (25) correspondant installé à l'intérieur du brin (3b) mobile de l'anse (3) de traction.

5. Panier-chariot multiorientable selon les revendications 3 et 4, lesdits membres d'enclenchement se **caractérisent en ce qu**'ils sont des éléments (20) et (23) sphéroïdes respectivement.

6. Panier-chariot multiorientable selon la revendication 4, un autre organe d'enclenchement intérieur se **caractérise en ce qu**'il comprend un membre (29) d'enclenchement constitué d'un piton pressé par un ressort (30) lamellaire sous forme d'un petit ressort à lame, logé à l'intérieur du brin (3b) extensible de l'anse (3) de traction.

7. Panier-chariot multiorientable selon la revendication 1, les moyens de roulement unidirectionnel se **caractérisent en ce qu**'il comprend un jeu de roulettes (10) montées sur un même arbre (11) qui pourvu de douilles (16) à vis emboîtent à pression dans les logements (13) ouverts des deux oreilles (15) de la structure du fond (2) du panier (1).

8. Panier-chariot multiorientable selon la revendication 1, l'organe de roulement multiorientable se **caractérise en ce qu'**il consiste à un membre (26) sphérique ou roue optionnelle de rotation libre monté sur l'arbre (26a) de rotation correspondant supporté sur des appuis (26b) contenus dans une douille (27) pourvue de presse-matériels (27b) fixés aux mamelons (27a) respectifs, à leur tour fixés à la base (2) du panier (1).

9. Panier-chariot multiorientable, selon la revendication 8 sur lequel ladite douille (27) se caractérise alternativement en ce qu'elle comprend un siège (28) de roulements pour faciliter la rotation libre du membre (26) sphérique.

## Claims

1. A multi-orientable basket with wheels, of the type which are used in self-service establishments, in which the user deposits the chosen products and carries them to the checkout counter, to subsequently be stacked on one another, plastic material being the material used to manufacture it, by means of an arrangement of the basket assembly (1) with a rectangular base with an upward prolongation having a frustoconical shape, by means of the walls and the bottom of the basket body (2), in which hollow holes or openings (9) are made, the basket having at its upper part a frame (4) framing it over its entire perimeter, containing in its upper base a U-shaped handle-grip (6) which pivots on points (8) of rotation, allowing it a path (7), and which is equipped with a pulling handle (3) and rolling means (10), which is **characterized in that** the corresponding U-shaped pulling handle (3) is extendable (31) in two, three or several positions through the respective interlocking points (18) made for that purpose in guided telescopic parts, a fixed part (3a) and another mobile part (3b), of said U-shaped pulling handle (3) which also comprise corresponding outer interlocking elements (17) and inner interlocking elements (19) and (29), defining the suitable extension for the drag by pulling or pushing said basket (1) through its corresponding one-way (10) and multi-orientable (12) rolling means (10) located at the respective ends of the base or bottom (2) of the basket (1) for its free and independent steering.

2. The multi-orientable basket with wheels according to claim 1, wherein said interlocking points are **characterized in that** they are simple holes (18) which are aligned and separated by the fixed part (3a) or the mobile part (3b) of the U-shaped pulling handle (3).

3. The multi-orientable basket with wheels according to claim 1, wherein the outer interlocking element is **characterized in that** it comprises an interlocking element (20) pressed by a respective spring (21) and housed in a bushing (22) fixed to the part (3a) of the pulling handle (3).

4. The multi-orientable basket with wheels according to claim 1, wherein the inner interlocking element is **characterized in that** it comprises an interlocking element (23) pressed by the respective spring (24) and mounted on the corresponding means (25) installed inside the mobile part (3b) of the pulling handle (3).

5. The multi-orientable basket with wheels according to claims 3 and 4, wherein said interlocking elements are **characterized in that that** they are spheroid elements (20) and (23) respectively.

6. The multi-orientable basket with wheels according to claim 4, wherein another inner interlocking element is also **characterized in that** it comprises an interlocking element (29) formed by a small laminar spring (30) laminar in the form of small spring of laminas, housed inside the extendable part (3b) of the pulling handle (3).

7. The multi-orientable basket with wheels according to claim 1, wherein the one-way rolling means are **characterized in that** they comprise a set of wheels (10) mounted on one and the same shaft (11) which, provided with threaded bushings (16), are snap-fitted in the open housings (13) of the two lugs (15) of the structure of the bottom (2) of the basket (1).

8. The multi-orientable basket with wheels according to claim 1, wherein the multi-orientable rolling element is **characterized in that** it is formed by a spherical element (26) or optional free rotation wheel mounted on the corresponding rotation shaft (26a) supported on supports (26b) contained in a bushing (27) provided with press-materials (27b) fixed to the respective protrusions (27a), fixed in turn to the base (2) of the basket (1).

9. The multi-orientable basket with wheels according to claim 8, wherein said bushing (27) is alternatively **characterized in that** it comprises a seat (28) for bearings to facilitate the free rotation of the spherical element.

## Patentansprüche

1. Mehrfach ausrichtbarer Einkaufskorb mit Rollen, der Art, die in Selbstbedienungseinrichtungen verwendet werden, bei denen der Benutzer die ausgewählten Produkte abstellt, und sie bis zur Kasse transportiert, um die Produkte zu bezahlen, um sie anschließend übereinander zu stapeln, wobei Plastikmaterial das für seine Herstellung eingesetzte Material ist, durch eine Anordnung des Zusammenbaus des Einkaufkorbs (1) mit rechteckigem Boden mit einer aufsteigenden Verlängerung, die eine kegelstumpfförmige Form hat, durch die Wände und den Grund des Körpers (2) des Einkaufkorbs, in denen Löcher oder hohle Öffnungen (9) ausgeführt werden, wobei der Einkaufkorb in seinem oberen Teil über einen Rahmen (4) verfügt, der ihn über seinen ganzen Umfang einrahmt, der an seinem oberen Boden einen "U"-förmigen Handgriff (6) enthält, der über Rotationspunkte (8) schwenkt, die ihm einen Ablauf (7) ermöglichen, und der mit einem Zuggriff (3) und Laufmitteln (10) ausgestattet ist, der **dadurch gekennzeichnet ist, dass** der entsprechende "U"-förmige Zuggriff (3) in zwei, drei, oder mehreren Stellungen durch die jeweiligen dafür in geführten ausziehbaren Teilen, einem fixen (3a) und einem anderen beweglichen (3b) des genannten "U"-förmigen Zuggriffs (3) ausgeführten Eingriffsstellen (18) ausziehbar ist (31), die auch entsprechende äußere (19) und innere (29) Eingriffselemente (17) umfassen, wobei er das für das Mitziehen oder Schieben des genannten Einkaufkorbs (1) geeignete Ausziehen über seine entsprechenden einfach gerichteten (10) und mehrfach ausrichtbaren (12) Laufmittel (10), die an den jeweiligen Enden des Bodens oder Grunds (2) des Einkaufkorbs (1) für seine freie und unabhängige Führung gelegen sind, definiert.

2. Mehrfach ausrichtbarer Einkaufskorb mit Rollen nach Anspruch 1, bei dem die genannten Eingriffsstellen **dadurch gekennzeichnet sind, dass** sie einfache durch das fixe Teil (3a) oder das bewegliche Teil (3b) des "U"-förmigen Zuggriffs (3) fluchtende und getrennte Löcher (18) sind.

3. Mehrfach ausrichtbarer Einkaufskorb mit Rollen nach Anspruch 1, bei dem das äußere Eingriffselement **dadurch gekennzeichnet ist, dass** es ein durch eine jeweilige Feder (21) gedrücktes und in einer an dem Teil (3a) des Zuggriffs (3) befestigten Hülse (22) untergebrachtes Eingriffselement (20) umfasst.

4. Mehrfach ausrichtbarer Einkaufskorb mit Rollen nach Anspruch 1, bei dem ein inneres Eingriffselement **dadurch gekennzeichnet ist, dass** es ein durch die jeweilige Feder (24) gedrücktes und auf dem entsprechenden im Inneren des beweglichen Teils (3b) des Zuggriffs (3) installierten Mittel (25) montiertes Eingriffselement (23) umfasst.

5. Mehrfach ausrichtbarer Einkaufskorb mit Rollen nach den Ansprüchen 3 und 4, bei dem die genannten Eingriffselemente **dadurch gekennzeichnet sind, dass** sie jeweils sphäroide Elemente (20) und (23) sind.

6. Mehrfach ausrichtbarer Einkaufskorb mit Rollen nach Anspruch 4, bei dem ein weiteres inneres Eingriffselement **dadurch gekennzeichnet ist, dass** es ein Eingriffselement (29) umfasst, das durch einem durch eine laminare Feder (30) in Form einer kleinen Blattfeder gedrückten Fortsatz gebildet ist, die im Inneren des ausziehbaren Teils (3b) des Zuggriffs (3) aufgenommen ist.

7. Mehrfach ausrichtbarer Einkaufskorb mit Rollen nach Anspruch 1, bei dem die einfach gerichteten Laufmittel **dadurch gekennzeichnet sind, dass** sie einen Satz Rollen (10) umfassen, die auf ein und derselben Achse (11) montiert sind, die mit Gewindehülsen (16) versehen ist, welche sich in den offenen Aufnahmen (13) der beiden Laschen (15) der Grundstruktur (2) des Einkaufkorbs (1) einpressen.

8. Mehrfach ausrichtbarer Einkaufskorb mit Rollen nach Anspruch 1, bei dem das mehrfach ausrichtbare Laufelement **dadurch gekennzeichnet ist, dass** es aus einem kugelförmigen Element (26) oder optionalen Rolle mit freier Rotation gebildet ist, das auf der entsprechenden Rotationsachse (26) montiert ist, die auf Lagern (26b) gestützt ist, die in einer Hülse (27) beinhaltet sind, die mit Druckmaterialien (27b) versehen ist, die an den jeweiligen Vorsprünge (27a) befestigt sind, die wiederum an dem Boden (2) des Einkaufkorbs (1) befestigt sind.

9. Mehrfach ausrichtbarer Einkaufskorb mit Rollen nach Anspruch 8, bei dem die genannten Hülse (27) alternativ **dadurch gekennzeichnet ist, dass** sie einen Laufsitz (28) umfasst, um die freie Rotation des kugelförmigen Elements (26) zu ermöglichen.
